# EUROPEAN PATENT APPLICATION

(11) **EP 1 138 655 A1**
(43) Date of publication of application: **04.10.2001**
(21) Application number: 01106479.7
(22) Date of filing: 22.03.2001
(51) Int. Cl.: C04B 41/50

(54) **Member made of carbonaceous material having layer for protective layer formation and method for producing the same**

(30) Priority: 30.03.2000 JP 2000094072
(71) Applicant: NGK INSULATORS, LTD., Nagoya-City, Aichi Prefecture 467-8530 (JP)
(72) Inventor: Hanzawa, Shigeru, Nagoya-city, Aich-prefecture, 467-8530 (JP); Nakano, Kenji, Nagoya-city, Aich-prefecture, 467-8530 (JP)
(74) Representative: Leson, Thomas Johannes Alois, Dipl.-Ing.

(57) **Abstract**

To provide a member made of carbon aceous material having a layer for forming a protective layer as an oxidation resistant protective layer and characterized in that a protective layer with a prescribed thickness and high wear resistance and practically resistant against oxidation even at 700°C, preferably 1000°C or higher, in an atmosphere with a dew point as high as 30 to 70°C or in the atmospheric air can be formed only in the surface layer part and to provide a method for producing the same member made of carbon. A member made of carbon aceous material having a layer for forming a protective layer as an oxidation resistant protective layer is made available by a method wherein carbon paper impregnated with a phenol resin is rolled on the surface of a member made of carbon aceous material and after curing the phenol resin or without curing the phenol resin, the resultant member is preferred at 500 to 600°C in an inert atmosphere to carbonize the phenol resin and to form the layer for the forming a protective layer as the oxidation resistant protective layer of silicon carbide and a method for producing such a member comprises steps of the foregoing steps.

## Description

### Background of the Invention and Related Art Statement

The present invention relates to a member made of carbon having a layer for forming a protective layer as an oxidation resistant protective layer and useful as a raw material for producing a member made of carbon coated with a high oxidation resistant protective layer even if exposed in a high dew point atmosphere with a dew point as high as 30 to 70°C or in the atmosphere at a high temperature of 700 to 1, 000°C, and particularly to a member made of carbon having a layer for forming a protective layer as an oxidation resistant protective layer and useful as a raw material for producing a member made of carbon coated with an oxidation resistant protective layer and useful for iron manufacturing industries and relates to a method for producing the same member made of carbon.

With rapid progress of technical innovations, a high oxidation resistant carbonaceous material practically resistant against oxidation even in a high dew point atmosphere with a dew point as high as 30 to 70°C or in the atmosphere at a temperature as high as at lowest 700, preferably at 1, 000°C or higher, is highly expected to be made available. Of course, in order to be used in such conditions, it is needless to say that the material is required to be light weight in terms of energy saving and easy workability in addition to high strength (high heat impact resistance) at a high temperature, high reliability (toughness, impact resistance, wear resistance) as a material, and durability to environments (corrosion resistance, oxidation resistance, radiation resistance).

The examples of the material to be used in a field where operation is carried out in such conditions are rolls for transportation in the steel industrial field, and stirring parts dealing with molten metals such as aluminum, zinc or the like. In such a field, a roll and a stirring part made of carbon has conventionally been used in consideration of the compatibility with the counterpart material. However, since a part made of carbon is poor in oxidation resistance and wear resistance, a trouble is sometimes caused that an object to be transported is damaged owing to the deterioration of the roll surface precision in the process of oxidation and that the roll main body itself is deteriorated in strength owing to the wear and broken. Further, since the heat distribution of a steel plate to be transported is uneven and unevenly high in both end parts of the steel plate, oxidation reaction is easy to proceed in roll parts touching the both end parts and as a result, it is supposed that the roll is intensely worn out. Consequently, the roll is required to be replaced frequently. Further, also regarding a stirring part, troubles that the strength is deteriorated by oxidation and wear and that the part is broken occur and actually the stirring part is replaced as frequently as every 2 to 4 weeks.

On the other hand, a variety of methods for forming an oxidation resistant protective film of silicon carbide on the surface layer part of a carbonaceous material have been proposed and in the case where a substrate is made of carbon or carbon with carbon fibers, presently any method has not yet been developed to form an oxidation resistant protective film of silicon carbide with smooth surface. The reason is because no means has yet been developed to selectively convert the carbon existing only in the surface layer part into silicon carbide even if the surface layer part is impregnated with metal silicon. Though a material produced by forming a SiC coating on a carbonaceous material by a vapor phase deposition method such as CVD or the like is made available on the market, it is costly and not widely used.

### Summary of the Invention

The prevent invention is developed in consideration of the above-mentioned conventional problems and the object of the present invention is to provide a member made of carbon having a layer for forming a protective layer as an oxidation resistant protective layer in which a protective layer of silicon carbide, which has high wear resistance and practically resistant to oxidation even in a high dew point atmosphere with a dew point as high as 30 to 70°C or in the atmosphere air at a high temperature at lowest 700°C, preferably at 1,000°C or higher can be formed only on the surface layer with a specified thickness and to provide a method for producing such a member made of carbon.

Inventors of the present invention have variously investigated in consideration of the above-mentioned situation and consequently found that the above-mentioned problems can be solved by a member of made of carbon having a layer for forming a protective layer as an oxidation resistant protective layer, and especially by a member of made of carbon having a layer for forming a protective layer as an oxidation resistant protective layer which can be produced by forming the layer for forming a protective layer as the oxidation resistant protective layer of silicon carbide by rolling carbon paper impregnated with a phenol resin on the surface of a member made of carbon, either curing the phenol resin or without curing it, prefiring the phenol resin at 500 to 600°C in an inert atmosphere, and carbonizing the phenol resin and thus the present invention has been accomplished.

That is, the present invention, at first, provides a member made of carbon having a layer for forming a protective layer as an oxidation resistant protective layer, preferably for forming an oxidation resistant protective layer of silicon carbide. The present invention also provides a member made of carbon whose substrate is a tubular body, a cylindrical body, or a rectangular body made of carbon and further provides a member made of carbon and having a layer for protective layer formation composed of carbon and carbon fibers and having 40 to 50% porosity and 5 to 6 mm thickness.

Further, the present invention provides a method for producing a member made of carbon having a layer for forming a protective layer as an oxidation resistant protective layer characterized by forming the layer for forming a protective layer as the oxidation resistant protective layer of silicon carbide by rolling carbon paper impregnated with a phenol resin on the surface of a member made of carbon, either curing the phenol resin or without curing it, prefiring the phenol resin at 500 to 600°C in an inert atmosphere, and carbonizing the phenol resin. Especially, the present invention provides a method of producing a member made of carbon characterized in that the layer for protective layer formation is composed of carbon and carbon fibers and has a porosity of 40 to 50 % and a thickness of 5 - 6 mm and a method for producing a member made of carbon characterized in that a substrate for the member made of carbon is a C/C composite, a Si-SiC type composite material, or a SiC type composite material.

### Brief Description of the Drawings

Fig. 1 is a figure schematically illustrating the method of producing a carbonaceous member relevant to the present invention and having a layer for forming a protective layer as an oxidation resistant protective layer.

Fig. 2 is a figure schematically illustrating the cross-section of a carbonaceous material in the state where carbon paper is rolled around the outer circumferential part of the carbonaceous material.

Fig. 3 is a perspective view illustrating the structure of a yarn aggregate composing a basic structure of a C/C composite usable as one of substrates of carbonaceous materials of the present invention.

### Detailed Description of Preferred Embodiment

A carbonaceous material composes of mainly amorphous carbon, carbon fibers, or amorphous carbon and carbon fibers in combination is used as a raw material for the substrate of the member made of carbon having a layer for protective film formation for forming an oxidation resistant protective layer relevant to the present invention. As the carbonaceous material used for the present invention is generally a composite material using carbon fibers. Any carbon fiber can be usable regardless of the production method and the used raw materials to be employed as the carbonaceous material for the present invention. At the time of practical use, a carbon fiber is formed to a prescribed shape using a powdered carbon, a binder and the likes to be used. In terms of durability, a C/C composite, which will be described later, is preferable. Incidentally, in this specification, the carbonaceous material includes amorphous carbon such as carbon black and carbon fibers.

For the substrate, not only mainly an amorphous carbon powder as described above but also those composed of carbon fibers are usable as the carbonaceous material to be used for the present invention. An example as the carbonaceous material for the substrate to be used for the present invention is at first an amorphous carbon powder such as carbon black. In the case of employing a carbon powder, the carbon powder is previously formed to a desired shape using a phenol resin or the like as binder and a silicon carbide film is formed on the surface of the formed product. In this case, a method disclosed in specification of JP-A-2000-81162 filed on March 23, 2000 is an example of the method for forming the silicon carbide layer.

Incidentally, in this specification, the carbonaceous material includes an amorphous carbon powder, as described above, and a carbon fiber itself and a C/C composite, which is included widely in carbon fiber, as well. Additionally, a Si-SiC type composite material and a SiC type composite material, which are carbonaceous materials produced by specified processing such as impregnating the C/C composite with a prescribed amount of metal silicon, are also included in the carbonaceous material. The properties and the production methods of these materials will be described in detail below. The term of a carbonaceous material is used as one denoting a C/C composite; a Si-SiC type composite material, and a SiC type composite material to avoid confusion in terms. Consequently, as the substrate, both of a carbon fiber by a narrow definition and the above-mentioned composite materials can be use.

In this specification, the C/C composite means a formed body or burned body of the formed body obtained by producing bundles of carbon fibers by adding pitch, coke, and the like, which are a powder binder to function as a matrix of bundles of carbon fibers and to be free carbon in relation to the bundles of carbon fibers after burning, and if necessary, further adding phenol resin powder, forming a soft coating of a plastic of a thermoplastic resin on the circumference of the bundles of the carbon fibers to obtain a preformed yarn as a soft intermediate material, forming the preformed yarn to be sheet-like or a cloth-like shape by a method disclosed in Japanese Patent Publication Number 2 - 80639 specification, layering a necessary amount of the preformed yarn, forming the layered yarn by a hot press, and optionally burning the formed body. That is, the C/C composite in the present invention means a composite material which is composed of carbon fibers and carbon other than carbon fibers and has a specified layered structure and a matrix: the carbon fibers form the layered structure composed of specified number of carbon fibers bundles and the carbon other than carbon fibers forms the matrix filling the gaps between neighboring layers of the layered structure.

A material produced by the following steps may be used as a C/C composite to be used as the substrate material: forming fiber yarn by bundling several hundreds to some ten thousands of carbon fibers with around 10 µm diameter, coating the fiber yarn with a thermoplastic resin to obtain a soft thread-like intermediate material, forming the obtained material to a sheet-like shape by a method disclosed in JP-A-2 - 80639 specification, arranging the sheet-like material in two-dimensional or three-dimensional direction to form a unidirectional sheet (UD sheet) or various kinds of cloths or layering the foregoing sheet or cloths to form a preliminarily formed body (fiber preform) with a prescribed shape, firing the coating of an organic matter of such as the thermoplastic resin formed on the outer circumference of the fiber yarn of the preliminarily formed body, and carbonizing and removing the coating. In the present specification, the content of JP-A-2-80639 is incorporated herein by reference. The C/C composite used for the present invention comprises preferably a carbon powder, especially preferably a graphitized carbon powder as a carbon component other than the carbon fibers in the above mentioned yarn.

In the present invention, the Si-SiC type composite material is a composite material containing 55 to 75 wt.% of carbon, 1 to 10 wt.% of silicon, and 10 to 50 wt.% of silicon carbide; composed of a yarn aggregate in which yarn elements containing at least bundles of carbon fibers and a carbon component other than carbon fibers are combined and integrally formed so as not to separate from one another in three-dimension while being oriented in the layer direction and a matrix of Si-SiC type material filling the gap between the yarn elements adjacent to one another; and having 0.05 to 0.6 dynamic friction coefficient and porosity controlled to be 0.5 to 10%. Such a material can be produced according to the method disclosed in JP-A-10-267402 filed on September 4, 1998. Hence, the content of JP-A-10-267402 is incorporated herein by reference.

In the present invention, the SiC type composite material is a SiC-C/C composite compounded composite material which is composed of silicon carbide, carbon fibers, and a carbon component other than the carbon fibers and has a structure composed of a skeletal part and a matrix formed in the surrounding of the skeletal part and of which at least 50% of silicon carbide is β type and the skeletal part is made of carbon fibers and a carbon component other than carbon fibers and allows partial existence of silicon carbide and the matrix is made of silicon carbide and the matrix and the skeletal part are integrally formed. The composite material has 0.5 to 5% porosity and a two-peak type distribution curve of the average pore diameter.

Consequently, the SiC type composite material comprises a C/C composite composed of carbon fiber yarn elements each containing carbon fibers as the skeletal part and owing to that, even if SiC is formed partly in the skeletal part, the structure of the respective carbon fibers is maintained without being broken, so that the carbon fibers are not shortened by carbo-siliconization and are almost perfectly retained and hence the SiC type composite material has a remarkable characteristic that the composite retains the mechanical strength of a raw material, the C/C composite, or the strength increased by carbo-siliconization. Further, the composite has a compounded structure in which the matrix of the SiC type material is formed in gaps between neighboring yarn elements in the yarn aggregate. At this point, the Si-C type composite material differs from the foregoing Si-SiC type composite material. Incidentally, this material can be produced according to the method disclosed in JP-A-11-31979 filed on February 9, 1999. Consequently, the content of JP-A-11-31979 is incorporated herein by reference.

Next, description given below is of a member made of carbon having a layer for forming a protective layer as an oxidation resistant protective layer according to the present invention. As for a member made of carbon having a layer for forming a protective layer as an oxidation resistant protective layer and made available by the present invention, the layer for protective layer formation formed on the surface layer of a substrate of the foregoing carbonaceous material for forming an oxidation resistant protective layer is preferably composed as to make it possible to form the oxidation resistant protective by impregnating the surface layer with metal silicon and forming silicon carbide by reaction of the metal silicon with carbon according to the method disclosed in specification of the Japanese Patent Application filed as Japanese Patent Application No. 2000-94129 on the same day as that of the present application. In general, since this material is used as a roll for steel plate transportation process, the substrate to be employed is a column type body or a tubular body having a hollow part in the inside. Needless to say, a substrate with a rectangular shape or the like is usable according to the use purpose and may be formed to be a cylindrical body or a tubular body at the time of rolling carbon paper.

Especially, as described above, in order to form the oxidation resistant protective layer of silicon carbide to be formed by reaction with metal silicon by the method disclosed in the specification applied in the same day only in the surface layer part with a specified thickness and in order to prevent the reaction of metal silicon with carbon of the carbonaceous material composing the substrate, the layer for protective layer formation has to be composed of carbon and carbon fibers and is preferable to have 40 to 50 % porosity and 5 to 6 mm thickness. That is because if the porosity is less than 40%, a protective layer of silicon carbide with a sufficient thickness can not be formed on the surface layer part, whereas if the porosity exceeds 50%, metal silicon penetrates even the substrate part and causes reaction with carbon composing the substrate and in that part, the surface rises to make it impossible to produce a member made of carbon having a surface keeping a smooth and curved face. The thickness of the layer for protective layer formation is preferably 5 to 6 mm and if the thickness is out of the range, it becomes impossible to produce a member made of carbon excellent in surface properties; a smooth and curved face and practically circular cross-section shape of the outer surface with a macroscopic view and 1.6 µm or smaller average surface roughness Ra of the outer surface with a microscopic view; and suitably usable for a roll or the like.

As for a member made of carbon having a layer for forming a protective layer as an oxidation resistant protective layer, the layer for protective layer formation made of carbon derived from an amorphous carbon and carbon paper is formed, for example, by rolling carbon paper previously impregnated with a prescribed amount of a phenol resin around the surface of a carbonaceous material such as a C/C composite or the like, curing the phenol resin or without curing the phenol resin, prefiring the resultant in a temperature range of 500 to 600°C in an inert atmosphere, and carbonizing the phenol resin. The thickness of the carbon paper to be used for rolling may be about 100 to 300 µm. The thickness of the rolled carbon paper is generally sufficient to be 5 to 6 mm after prefiring as the thickness of the layer for protective layer formation.

Although the carbon paper is not specifically restricted unless the carbon paper can be impregnated with a phenol resin, a carbon sheet having about 90 to 95% porosity and easy to be impregnated with a phenol resin is preferable to be used. The amount of the phenol resin to be impregnated in the carbon paper is preferable to be enough to convert the entire amount of carbon produced by carbonization of the phenol resin and not lower than 10%, preferably, not lower than 50%, of carbon composing the carbon paper in the sum of carbon produced by carbonization of the phenol resin and the carbon composing the carbon paper to silicon carbide of the oxidation resistant protective layer by reaction with metal silicon by the method disclosed in the specification filed as Japanese Patent Application No. 2000-94129 on the same day as that of the present application. Both the novolak type and the resol type ones may be used as the phenol resin and the resol type, which is a liquid at a normal temperature, is advantageous in the handling easiness.

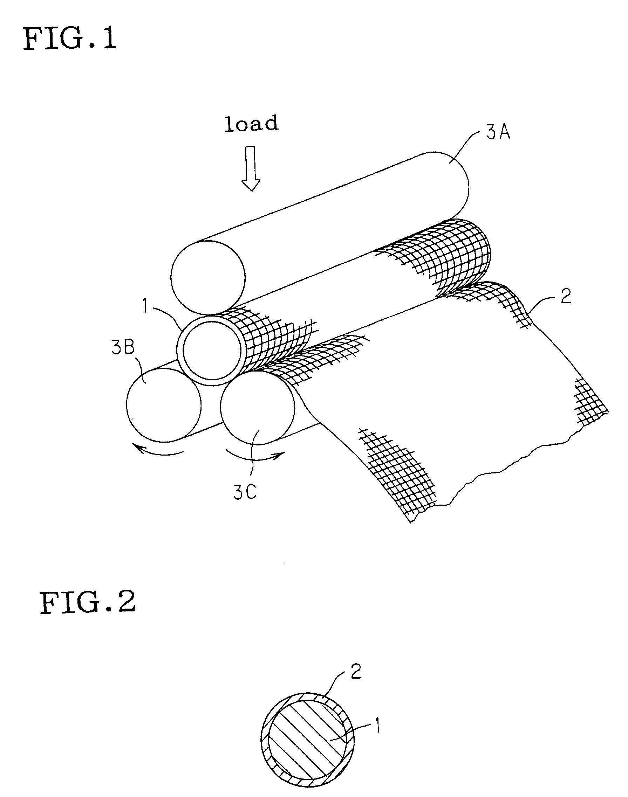

To roll the carbon paper impregnated with a desired amount of a phenol resin around the surface of a carbonaceous material, a substrate, as the partly eliminated perspective view schematically illustrated in Fig. 1, the carbonaceous material 1 is supported by three rolls 3A, 3B, and 3C made of a metal and the carbon paper 2 impregnated with a desired amount of a phenol resin is rolled while the respective rolls made of a metal being rolled in the directions respectively shown by the arrows. In general, the rolling is carried out at rolling speed about 1 cm/min while applying a desired extent of load. At the time when the thickness reaches the desired thickness, the rolling operation is stopped and as its cross-section being illustrated in Fig. 2, the carbonaceous material 1 on whose outer circumferential part the carbon paper 2 is rolled is obtained. Next, the phenol resin with which the carbon paper is impregnated is cured at about 200°C. Of course, without curing the phenol resin, the resultant substrate is housed in a prefiring furnace and gradually heated in an inert atmosphere and subjected to prefiring at 500 to 600°C to completely carbonize the phenol resin. In terms of duration, about 8 hour is sufficient. In such a manner, a member made of carbon having a layer for forming a protective layer as an oxidation resistant protective layer with a desired thickness can be produced.

### [Example]

Hereinafter, more detailed description of embodiments of the present invention will be given according to examples, however the present invention is not restricted to the examples and covers any modifications or embodiments as long as they are within the true scope of the invention.

### (Production example)

### (1) Production of a C/C composite

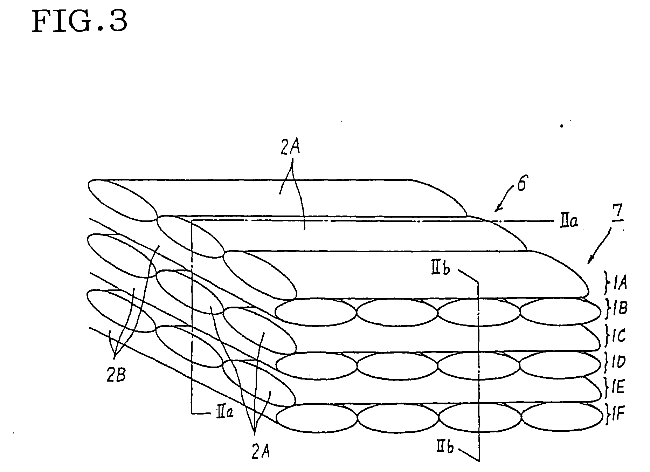

About ten thousand of carbon long fibers with 10 µm diameter were bundled and pitch, coke and phenol resin powder to be free carbon were add to obtain fiber yarn. The yarn was arranged like a screen to obtain yarn array elements (prepreg sheet) and these yarn array elements were arranged as illustrated in Fig. 3 to obtain prepreg sheet laminated body, the prepreg sheet laminated body was formed by a hot press at 600°C and 80 Kg/cm², and then the formed body was fired at 2000°C in nitrogen atmosphere to obtain a C/C composite with 50 mm width, 1000 mm length, and 50 mm thickness. The obtained composite was processed to be a column shape with φ50 x 950 mm size by lathering.

### (2) Production of a member made of carbon having a layer for forming a protective layer as an oxidation resistant protective layer

Carbon paper (produced by Kureha Chemical Industry Co., Ltd.) previously impregnated with a prescribed amount of a phenol resin was tightly rolled around a substrate of a member made of carbon and obtained by the above mentioned process (1), the resultant body dried with a wind was housed in a furnace and gradually heated in argon atmosphere, and when heated to about 600°C, the body was kept at the temperature for about 3 hours to completely carbonize the phenol resin. On completion of the carbonization operation, the temperature of the inside of the furnace was'gradually lowered and at the time when the temperature becomes a room temperature, a member made of carbon having a layer for forming a protective layer as an oxidation resistant protective layer was taken out the furnace.

The member made of carbon having a layer for forming a protective layer as an oxidation resistant protective layer was provided with an about 5 mm thick layer for forming a protective layer as an oxidation resistant protective layer.

Using the member made of carbon having a layer for forming a protective layer as an oxidation resistant protective layer relevant to the present invention and produced by a manner as described above, a silicon carbide layer was formed according to a method applied on the same day as that of the present invention for forming a silicon carbide layer as the above mentioned oxidation protective layer. That is, the foregoing carbonaceous material was immersed in water stored in a container enabled to be vacuum, and after the pressure was decreased to completely expel the air contained in the void parts formed mainly in the surface layer part, the pressure was restored and then a slurry of metal silicon (water : metal silicon = 1 : 1) was added to impregnate the void parts formed mainly in the surface layer part with the metal silicon. Then, the resultant carbonaceous material was taken out the container, dried in vacuum state and housed in a furnace. The material was gradually heated to about 2000°C in argon atmosphere, kept at the temperature for about 3 hours to completely carry out reaction of the metal silicon with carbon to form an oxidation resistant protective layer of silicon carbide on the surface layer part. The obtained carbonaceous material was housed in a furnace at 1000°C and having 30°C dew point and kept for 10 hours to find no weight increase. The oxidation resistant protective film formed on the surface of the obtained carbonaceous material was found with naked eye observation having smooth and curved face in the outer surface and the cross-section was found practically circular and the average surface roughness Ra of the outer surface was 1.2 µm to make it clear that the obtained material was suitably usable as the member made of carbon for rolls and the likes.

As a comparative example, the amount of the phenol resin to be used for impregnation was controlled and a carbonaceous material with 70% porosity in the surface layer part was subjected to the same treatment as described above and then a protective layer was formed in the same manner to find that a reaction with carbon composing the substrate part was partially caused and no obtained material had smooth and curved face. Consequently, the obtained material was judged to be insufficient to be used for rolls.

As being made clear by the experimental results as described above, the carbonaceous member having a layer for forming a protective layer as an oxidation resistant protective layer and producible by the method relevant to the present invention can reliably provide a carbonaceous material usable as rolls while being coated with an'oxidation resistant protective layer of silicon carbide. Consequently, it can be said that the material is extremely useful for production of a carbonaceous material coated with the oxidation resistant protective layer of silicon carbide and usable for rolls and the likes to be used for, for example, steel plate transportation process in an atmosphere with a dew point as high as 30 to 70°C or in the atmospheric air.

To provide a member made of carbon having a layer for forming a protective layer as an oxidation resistant protective layer and characterized in that a protective layer with a prescribed thickness and high wear resistance and practically resistant against oxidation even at 700°C, preferably 1000°C or higher, in an atmosphere with a dew point as high as 30 to 70°C or in the atmospheric air can be formed only in the surface layer part and to provide a method for producing the same member made of carbon. A member made of carbon having a layer for forming a protective layer as an oxidation resistant protective layer is made available by a method wherein carbon paper impregnated with a phenol resin is rolled on the surface of a member made of carbon and after curing the phenol resin or without curing the phenol resin, the resultant member is preferred at 500 to 600°C in an inert atmosphere to carbonize the phenol resin and to form the layer for the forming a protective layer as the oxidation resistant protective layer of silicon carbide and a method for producing such a member comprises steps of the foregoing steps.

## Claims

1. A member made of carbon having a layer for forming a protective layer as an oxidation resistant protective layer.

2. A member made of carbon as claimed in claim 1, wherein the oxidation resistant protective layer is a silicon carbide layer.

3. Amember made of carbon as claimed in either one of claims 1 and 2, wherein the substrate of the member made of carbon is a tubular body, a cylindrical body, or a rectangular body made of carbon.

4. A member made of carbon as claimed in any one of claims 1 to 3, wherein the layer for the protective layer formation is composed of carbon and carbon fibers and has 40 to 50% porosity and 5 to 6 mm thickness.

5. A method for producing a member made of carbon having a layer for forming a protective layer as an oxidation resistant protective layer of silicon carbide, **characterized by** forming the layer for forming a protective layer as the oxidation resistant protective layer made of silicon carbide by rolling carbon paper impregnated with a phenol resin on the surface of a member made of carbon, either curing the phenol resin or without curing it, prefiring the phenol resin at 500 to 600°C in an inert atmosphere, and carbonizing the phenol resin.

6. A method for producing a member made of carbon as claimed in claim 5, wherein the layer for protective layer formation is composed of carbon and carbon fibers and has 40 to 50% porosity and 5 to 6 mm thickness.

7. Amethod for producing a member made of carbon as claimed in either one of claims 5 or 6, wherein the substrate of the member made of carbon is a C/C composite, a Si-SiC type composite material, or a SiC type composite material.
